Europäisches Patentamt

(19) European Patent Office

Office européen des brevets

(11) Numéro de publication: **0 099 330**
**B1**

(12) **FASCICULE DE BREVET EUROPEEN**

(45) Date de publication du fascicule du brevet:
**30.04.86**

(21) Numéro de dépôt: **83810281.2**

(22) Date de dépôt: **23.06.83**

(51) Int. Cl.⁴: **G 01 L 9/08**

(54) Elément sensible à la pression et capteur de pression en faisant application.

(30) Priorité: **13.07.82 FR 8212532**

(43) Date de publication de la demande:
**25.01.84 Bulletin 84/4**

(45) Mention de la délivrance du brevet:
**30.04.86 Bulletin 86/18**

(84) Etats contractants désignés:
**CH DE GB LI**

(56) Documents cités:
**US - A - 3 902 355**
**US - A - 4 099 078**

**PATENTS ABSTRACTS OF JAPAN, vol. 5, no. 146(P-80)(818), 16 septembre 1981**
**PATENTS ABSTRACTS OF JAPAN, vol. 6, no. 237(P-157)(1115), 25 novembre 1982**

(73) Titulaire: **ASULAB S.A., Faubourg du Lac 6, CH-2501 Bienne (CH)**

(72) Inventeur: **Dinger, Rudolf, Charrières 7, CH-2024 St-Aubin (CH)**

(74) Mandataire: **Barbeaux, Bernard et al, SMH Société Suisse de Microélectronique et d'Horlogerie S.A. Département Brevets et Licences 6, Faubourg du Lac, CH-2501 Bienne (CH)**

## Description

La présente invention a pour objet un élément sensible à la pression et un capteur utilisant ledit élément sensible.

De façon plus précise l'invention concerne un dispositif pour mesurer des pressions qui sont comprises entre quelques millibars et au moins un bar.

Pour mesurer des pressions dans ce domaine on trouve tout d'abord des manomètres qui sont basés sur la déformation d'une membrane mince par la pression à mesurer. Le phénomène de départ est donc d'ordre mécanique. Ces manomètres sont volumineux. De plus, ils ne permettent pas une lecture à distance de la mesure de pression puisque la liaison entre la membrane déformée et l'organe d'affichage est entièrement mécanique. Dans ce même domaine de pression on connaît également des appareils qui sont basés sur des capteurs ou des bancs de capteurs piézo-résistifs. L'inconvénient de tels dispositifs est que, d'une part, ils sont chers et susceptibles d'être détruits par une surpression et que, d'autre part, ils délivrent un signal analogique qu'il est donc nécessaire de convertir en grandeur digitale pour effectuer ultérieurement un traitement numérique. En conséquence les installations qui mettent en oeuvre des enceintes sous vide sont le plus souvent dépourvues de dispositifs de mesure de pression dans ce domaine, ce qui n'est pas sans inconvénient sur leur fiabilité de fonctionnement.

Le principal but de l'invention est de fournir un élément sensible à la pression dans le domaine qui va de quelques millibars à au moins un bar, qui présente une bonne linéarité et une bonne sensibilité, et qui de plus délivre une information de pression sous forme d'une grandeur pseudo-digitale ou plus précisemment sous forme d'une fréquence.

Un autre but de l'invention est de fournir un capteur de mesure de pression utilisant l'élément sensible défini ci-dessus dans lequel le circuit électronique de traitement du signal délivré par l'élément sensible est très simple.

L'élément sensible selon la revendication 1 et le capteur de mesure selon la revendication 3 atteignent cas buts.

Ce type particulier de diapason permet d'obtenir un accroissement substantiel de l'effet de pression par rapport au coefficient barométrique d'un diapason de type classique, tel que celui qui est décrit par example, dans le brevet US-A-4099078. En outre une telle stucture de diapason est tout à fait compatible avec un usinage de celui-ci par gravure chimique et donc avec une production des éléments sensibies en grande série.

D'autres caractéristiques et avantages de l'invention apparaîtront plus clairement à la lecture de la description qui suit d'un mode de réalisation de l'invention donné à titre d'exemple non limitatif. La description se référe au dessin annexé sur lequel:

- la figure 1 est une vue en perspective d'un diapason de type classique;
- la figure 2a est une vue en perspective d'un diapason particulier formant l'élément sensible selon l'invention;
- la figure 2b est une vue en coupe verticale des bras du diapason montrant un exemple de réalisation des électrodes pour exciter le diapason en flexion;
- la figure 3 est un diagramme illustrant le fonctionnement de l'élément sensible selon l'invention;
- la figure 4 montre un capteur de pression selon l'invention, sous une forme simplifiée; et
- la figure 5 illustre un circuit de traitement des signaux délivrés par l'élément sensible selon les figures 2 à 4.

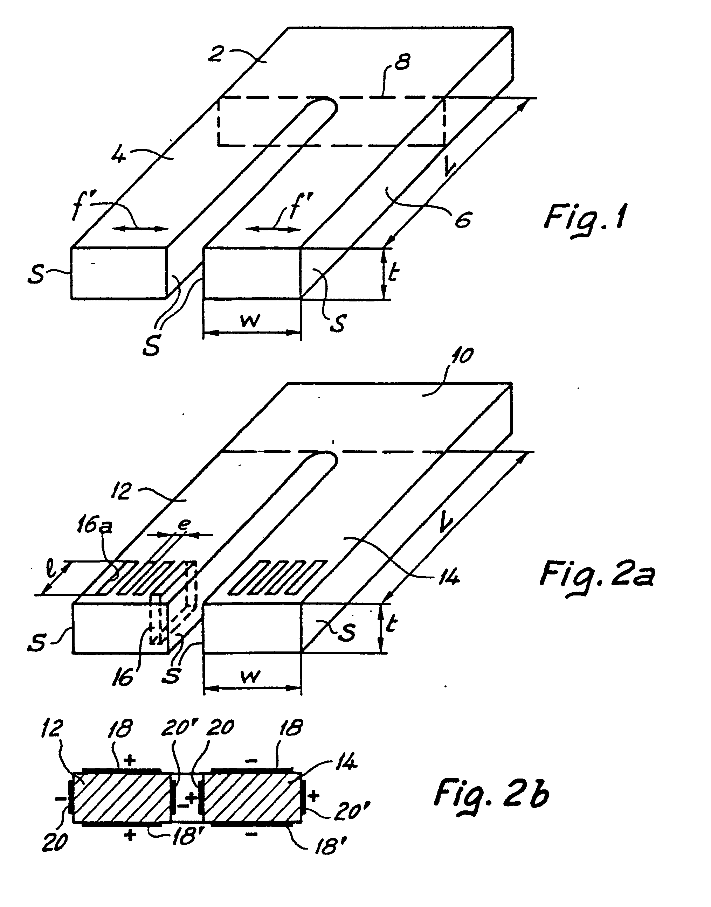

Le diapason de type classique représenté sur la figure 1 comprend une base 2 et deux bras respectivement référencés 4 et 6. Les bras 4 et 6 sont rattachés à la base 2 au niveau d'un plan 8 représenté en traitillés. Chaque bras a une longueur L, une largeur w et une épaisseur t et présente des faces latérales désignées par S. Dans le cas où un tel diapason est excité en flexion, c'est-à-dire dans le cas où ses bras vibrent comme cela est illustré par les flèches f' la variation de fréquence propre $\Delta f$ du résonateur en fonction de la pression p est donnée par la formule suivante:

$$\frac{\Delta f}{f} = k_1 \times \frac{p}{\bar{v}} \times \frac{s}{m} \times \frac{1}{\omega}$$

Dans cette formule f représente la fréquence de vibration du diapason, $\bar{v}$ la vitesse d'agitation thermique moyenne des molécules du gaz entourant le diapason, gaz qui est à la pression p, s représente la surface de chacun des flancs S des bras, c'est-à-dire la surface qui est perpendiculaire à la vitesse de déplacement, m représente la masse en mouvement du diapason c'est-à-dire la masse des bras limitée par leur contour extérieur et par le plan 8, $\omega$ est la pulsation à la résonance et vaut donc $2\pi f$, et $k_1$ est une constante.

Compte tenu de la définition donnée précédemment pour s et m, ces deux grandeurs peuvent s'exprimer de la maniére suivante:

$S = L \times t$ et $m = \rho L \times t \times w$,

$\rho$ étant la densité du quartz.

Si l'on reporte ces valeurs de s et m dans la formule précédente, on obtient l'expression suivante:

$$\frac{\Delta f}{f} = k_2 \times \frac{p}{\bar{v}} \times \frac{1}{w} \times \frac{1}{\omega} \quad , k_2 \text{ étant une constante.}$$

$k_2$ étant une constante.

On voit, dans cette formule, que la variation relative de fréquence en fonction de la pression dépend, quant aux grandeurs dimentionnelles, uniquement de l'inverse de la largeur w des bras. Il faut cependant ajouter que, comme cela est bien connu, la pulsation ω dépend de la longueur L et de la largeur w des bras.

Pour augmenter la sensibilité à la pression du diapason il faudrait donc diminuer la largeur w des bras du diapason pour diminuer la pulsation ω. Cependant une telle solution (bras du diapason étroits) entraîne une capacité dynamique du diapason très faible ce qui rend une telle conception inutilisable.

La figure 2a montre un diapason selon l'invention. On retrouve bien entendu une base 10 et deux bras référencés respectivement 12 et 14. Selon l'invention les extrémités libres des deux bras sont percées de fentes longitudinales parallèles à la longueur des bras. Dans l'exemple particulier considéré on trouve quatre fentes 16 à l'extrémité de chaque bras. Ces fentes ont une longueur l et une largeur e. On voit qu'en conséquence les faces latérales 16a des fentes 16 sont disposées parallèlement aux surfaces latérales S des bras du diapason qui interviennent dans l'effet de pression. En outre la largeur e fentes est suffisante pour que sa valeur soit nettement supérieure au libre parcours moyen des molécules du gaz. Ce diapason étant excité en flexion, les faces latérales 16a des fentes 16 sont disposées orthogonalement au déplacement des bras.

La figure 2b montre un exemple de réalisation des électrodes pour exciter le diapason de la figure 2a en flexion. Chaque bras 12, respectivement 14, comporte deux électrodes 18 et 18' disposées respectivement sur la face supérieure et sur la face inférieure du bras et deux électrodes latérales 20 et 20' disposées sur les fléncs S des bras . Les électrodes opposées sont portées au même potentiel comme cela est indiqué sur la figure 2b.

Il est important d'observer que la présence des fentes ne gêne pas la réalisation des métallisations formant les électrodes. En effet il est bien connu que l'extrémité des bras des diapasons est laissée libre d'électrode afin d'éviter l'excitation des modes partiels de flexion.

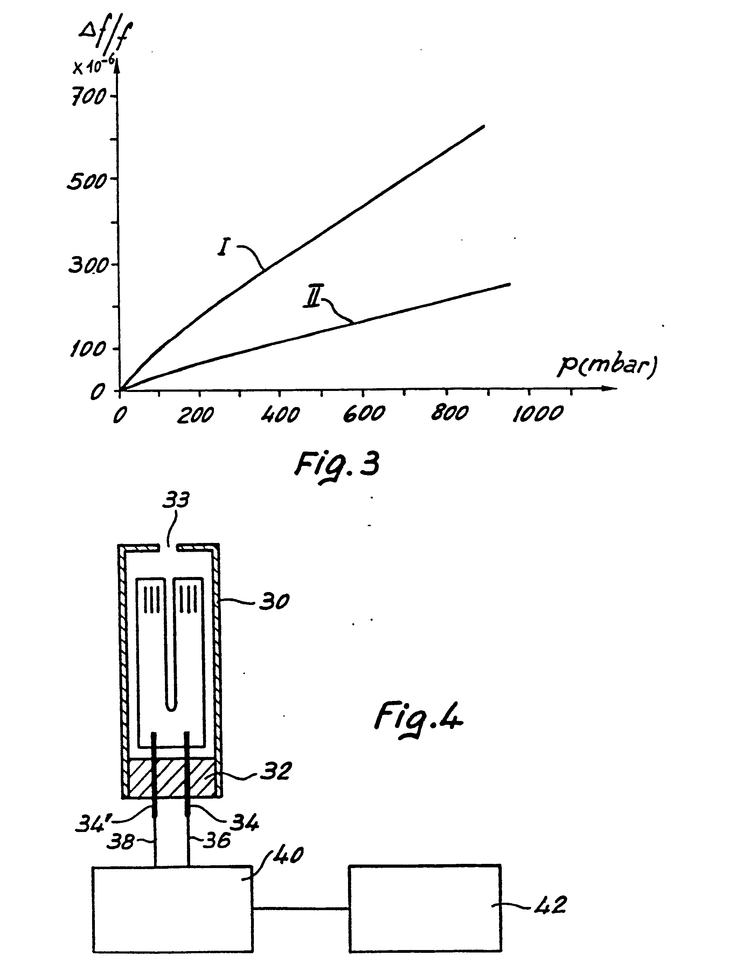

La courbe 1 de la figure 3 illustre le fonctionnement du diapason des figures 2a et 2b. Cette courbe donne la variation relative de fréquence

$$\frac{\Delta f}{f}$$

en fonction de la pression p exprimée en millibars. Ce diapason, qui a des dimensions horlogères, présente une longueur L de bras de l'ordre de 2,7 mm, une largeur w de 215 μm et une épaisseur t de 125 μm. Chaque fente 16 a une longueur l de 1 mm et une largeur e de 30 microns. Cette courbe I montre qu'on obtient, dans une plage allant de quelques millibars à environ 1 bar, une relation très linéaire entre la variation relative de fréquence du diapason et la pression avec un coefficient de dépendance vis-à-vis de la pression qui vaut environ 631 $10^{-6}$/bar. Il faut comparer cette valeur au même coefficient pour un diapason en quartz classique de caractéristiques similaires mais dépourvu de fentes qui vaut alors 250 $10^{-6}$/bar. La courbe II correspond à un tel diapason pour lequel L vaut 2400 μm, w vaut 220 μm et t vaut 125 μm. On voit donc qu'on obtient une augmentation très significative de l'effet de pression.

De plus les diapasons ainsi réalisés ont une fréquence propre d'environ 77 kHz. Si l'on augmente la longueur des bras du diapason pour ramener sa fréquence propre à environ 32 KHz la formule donnée précédemment montre que le coefficient de dépendance vis à vis de la pression est multiplié par au moins deux. On voit donc qu'avec un diapason selon les figures 2a et 2b on peut obtenir, dans la gamme qui va de quelques millibars à au moins un bar, un senseur de pression dans lequel la variation relative de fréquence en fonction de la pression présente un coefficient qui vaut environ 1200 $10^{-6}$/bar. On comprend aisément que cela permet de faire une mesure précise de la pression.

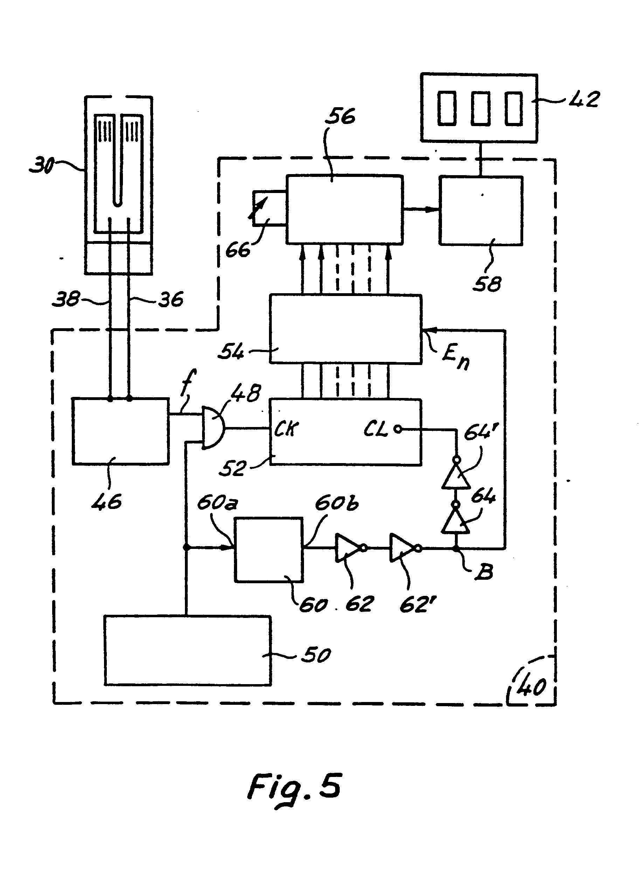

La figure 4 représente sous forme simplifiée un capteur de pression utilisant un élément sensible selon l'invention. L'élément sensible est enfermé dans un boîtier constitué par exemple par un capot cylindrique 30 en laiton et une embase 32 au moins partiellement isolante. Le capot 30 est bien sûr percé d'une ouverture 33 pour mettre l'intérieur du boîtier à la pression à mesurer. L'embase 32 est traversée par deux barrettes conductrices 34 et 34'. La base du diapason est fixée sur l'extrémité interne des barrettes de telle manière que chaque barrette soit reliée à un des deux groupes d'électrodes. Les extrémités externes des barrettes 34 et 34' sont reliées à des conducteurs 36 et 38. Les signaux de fréquence apparaîssant sur les conducteurs 36 et 38 sont introduits dans un circuit d'alimentation et de traitement 40 qui commande à son tour des moyens 42 d'affichage de la pression mesurée par le capteur.

Le circuit 40 a pour but, d'une part, d'entrenir l'oscillation de l'élément sensible à sa fréquence propre compte tenu de la pression environnante et, d'autre part, de traiter le signal de fréquence pour déduire des variations de fréquence la valeur de la pression.

La figure 5 donne un exemple de réalisation du circuit 40. Les deux fils de connection 36 et 38 attaquent un circuit d'entretien 46 de type classique qui délivre à sa sortie un signal de fréquence f qui dépend de la pression à mesurer. Ce signal f est appliqué à l'une des deux entrées d'une porte ET référencée 48, la seconde entrée de la porte 48 recevant le signal délivré par un générateur de signaux 50. Le générateur 50 émet par exemple un signal de période 1 s et de durée 10 ms. La sortie de la porte 48 attaque l'entrée d'horloge CK d'un compteur 52. Les sorties d'état du compteur 52 sont reliées aux entrées d'une mémoire commandable 54. Les sorties de la mémoire 54 attaquent un circuit de calcul 56 dont les sorties commandent un circuit 58 de codage pour le dispositif d'affichage 42. La sortie du générateur 50 est également reliée à l'entrée 60a d'un circuit de détection 60 qui délivre sur sa sortie 60b une impulsion lorsqu'on applique sur son entrée 60a le front descendant d'un signal. La sortie 60b du détecteur 60 est reliée à un point B par l'intermédiaire de deux inverseurs 62 et 62′ qui constituent des circuits à retard. Le point B est relié d'une part à l'entrée de remise à zéro CL du compteur 52 par l'intermédiaire des inverseurs 64 et 64′ et d'autre part à l'entrée d'activation En de la mémoire commandable 54.

Le fonctionnement du circuit de la figure 5 se déduit aisément de la description précédente. Tant que le signal à la sortie du générateur 50 est au niveau logique bas la porte 48 est fermée et le compteur 52 n'est pas incrémenté. A l'apparition du front de montée du signal délivré par le générateur 50 la porte 48 est débloquée et le compteur 52 reçoit sur son entrée d'horloge CK les impulsions du signal de fréquence f. Lorsque la sortie du générateur 50 passe du niveau haut au niveau bas la porte 48 est bloquée et le compteur 52 n'est plus incrémenté. Simultanément le détecteur 60 émet une impulsion qui, avec un léger retard, transfert le contenu présent du compteur 52 dans la mémoire 54. On comprend aisément que ce contenu est égal au nombre d'impulsions contenues dans le signal de fréquence f pendant la durée du signal délivré par le générateur 50, c'est-à-dire par exemple pendant 100 ms. Le contenu de la mémoire 54 représente donc sous forme numérique la fréquence de l'élément sensible de mesure. L'impulsion délivrée par le détecteur 60 remet ensuite à zéro le compteur 52 pour une nouvelle mesure lors de l'apparition de l'impulsion suivante du signal délivré par le générateur 50. Le contenu, sous forme numérique binaire, de la mémoire 54 est traité par le circuit de calcul 56 pour transformer cette fréquence en un nombre, par exemple, de millibars. On comprend aisément que le circuit 56 a simplement pour effet d'enlever une valeur prédéterminée, fixée par exemple par des moyens de réglage 66, au nombre d'impulsions comptées pour tenir compte de la valeur de la fréquence à la pression de référence, et de diviser ce résultat par un coefficient fixe ou commandable donnant le rapport entre le nombre de millibars et la variation de fréquence. Le résultat de ce calcul est appliqué au circuit 58 qui commande l'affichage de la pression par le moyen d'affichage 42.

Il est bien connu que la fréquence délivrée par un cristal de quartz dépend de la température. Plus précisément dans le cas d'un diapason de coupe sensiblement Z, c'est-à-dire dans lequel les faces principales sont sensiblement perpendiculaires à l'axe optique Z du quartz, la courbe qui donne les variations relatives de fréquence en fonction de la température est sensiblement parabolique et présente un sommet correspondant à la température d'inversion du quartz. Il est possible de choisir un angle de coupe θ de telle manière que cette température d'inversion soit centrée par rapport à la plage habituelle d'utilisation du capteur de pression. Par exemple, si la normale aux faces principales du diapason fait un angle de 2° par rapport à la direction Z du quartz, la température d'inversion est égale à 25° C. Dans ces conditions les variations relatives de fréquence en fonction de la température sont données par le coefficient β égal à environ $34. 10^{-9}/°C^2$. Si l'on compare ce coefficient thermométrique au coefficient de pression obtenu grâce à l'invention, il apparaît clairement que si la température reste dans une plage raisonnable de part et d'autre de la température d'inversion l'effet de température n'altère pas de façon significative la mesure de la pression.

Il faut ajouter que la plage de fonctionnement donnée précédemment, de quelques millibars à un bar, ne doit pas s'interpréter limitativement. Cela correspond à un bon fonctionnement du diapason tel qu'il ne nécessite pas un circuit électronique très élaboré. Lorsque la pression p augmente la sensibilité linéaire à la pression reste bonne mais c'est le facteur de qualité du résonateur qui se détériore. Il faut cependant considérer que la plage de fonctionnement du capteur selon l'invention peut être étendue jusqu'à 5 bars en adaptant le circuit électronique.

Il découle de la description précédente que l'élément sensible à la pression répond très bien au problème posé.

Tout d'abord la fabrication du résonateur relève des techniques utilisées habituellement pour les résonateurs horlogers et l'introduction des fentes ne complique pas de façon significative la gravure du quartz ou la réalisation des électrodes. Ensuite on obtient un très bon fonctionnement de l'élément sensible dans la plage allant en particulier jusqu'à un bar, plage où les capteurs connus ne permettent pas une mesure à distance. Enfin, compte tenu de la très forte sensibilité à la pression de l'élément sensible, il n'est pas nécessaire de prévoir une compensation thermique, ce qui simplifie la structure du capteur et en particulier celle du circuit électronique.

**Revendications:**

1. Elément sensible pour capteur de pression comprenant un diason (10, 12, 14) en matériau piézo-électrique comportant une base (10) et deux bras (12, 14) schacun desdits bras comportant deux flancs (s) sensiblement parallèles à la longueur desdits bras et sensiblement perpendiculaires aux faces principales du diapason, ledit diapason étant muni d'électrodes (18, 18′, 20, 20′ ou 22, 22′) pour faire vibrer lesdits bras en flexion selon une direction (f′) sensiblement perpendiculaire auxdits flancs, caractérisé en ce que chaque bras (12, 14) est muni au voisinage de son extrémité d'au moins une fente (16) allongée disposée parallèlement auxdits flancs pour que les parois (16a) de ladite fente (16) soient également sensiblement perpendiculaires à la direction (f') de déplacement desdits bras, ladite fente (16) traversant la totalité de l'épaisseur (t) des bras.

2. Elément sensible selon la revendication 1, caractérisé en ce que ledit diapason est en quartz et a ses flancs sensiblement parallèles à la direction de l'axe optique Z du quartz.

3. Capteur de mesure de la pression d'un gaz, caractérisé en ce qu'il comprend:.

- un élément sensible selon l'une quelconque des revendications 1 et 2;

- un boîtier (30, 32) muni d'une ouverture (33) pour y laisser pénétrer le gaz dont la pression est à mesurer, ledit diapason (10, 12, 14) étant fixé dans ledit boîtier;

- des moyens pour appliquer (34, 34', 36, 38, 46) des tensions auxdites électrodes (18, 18', 20, 20' ou 22, 22') et pour recueillir (48 à 54 et 60 à 64') la fréquence propre d'oscillation dudit diapason sous l'effet de ladite pression; et

- des moyens (56, 66) pour convertir les variations de ladite fréquence en une indication de pression.

**Patentansprüche**

1. Druckempfindliches Element enthaltend eine Stimmgabel (10, 12, 14) aus piezoelektrischem Material umfassend eine Basis (10) und zwei Zinken (12, 14), wobei jeder der genannten Zinken zwei Flanken (S) genau parallel zur Länge der genannten Zinken und genau senkrecht zu den Hauptflächen der Stimmgabel aufweist, wobei die genannte Stimmgabel mit Elektroden (18, 18', 20, 20' oder 22, 22') versehen ist, um die genannten Zinken in einer Richtung (f') genau senkrecht zu den genannten Flanken Biegeschwingungen ausführen zu lassen, dadurch gekennzeichnet, daß jeder Zinken (12, 14) benachbart zu seinem Ende wenigstens mit einem langgestreckten Schlitz (16) versehen ist, der parallel zu den genannten Flanken angeordnet ist, damit die Wandungen (16a) des genannten Schlitzes (16) ebenfalls genau senkrecht zur Bewegungsrichtung (f') der genannten Zinken verlaufen, wobei der genannte Schlitz (16) sich über die gesamte Zinkenstärke (t) erstreckt.

2. Element gemäß Anspruch 1, dadurch gekennzeichnet, daß die genannte Stimmgabel aus Quarz ist und ihre Flanken genau parallel zur Richtung der optischen Achse Z des Quarzes verlaufen.

3. Druckwandler für Gasdruck, dadurch gekennzeichnet, daß er umfaßt

- ein empfindliches Element gemäß einem der Ansprüche 1 und 2;

- ein Gehäuse (30, 32) versehen mit einer Öffnung (33) zum Eindringenlassen des Gases, dessen Druck gemessen werden soll, hierdurch, wobei die Stimmgabel (10, 12, 14) in dem genannten Gehäuse befestigt ist;

- Mittel zum Anlegen (34, 34', 36, 38, 46) von Spannungen an die genannten Elektroden (18, 18', 20, 20' oder 22, 22') und zum Aufnehmen (48 bis 54 und 60 bis 64') der Eigenschwingungsfrequenz der genannten Stimmgabel unter der Einwirkung des besagten Drucks; und

- Mittel (56, 66) zum Umwandeln der Änderungen der besagten Frequenz in eine Druckangabe.

**Claims**

1. Sensing element for a pressure transducer comprising a tuning fork (10, 12, 14) of piezoelectric material including a base (10) and two arms (12, 14) each of said arms including two sides (S) substantially parallel to the length of said arms and substantially perpendicular to the principal faces of the tuning fork, said tuning fork being provided with electrodes (18, 18', 20, 20', or 22, 22') to cause said arms to vibrate in flexion in a direction (f') substantially perpendicular to said sides, characterized in that each arm (12, 14) is provided proximate its end with at least one elongated slot (16) arranged parallel to said sides in order that the walls (16a) of said slot are likewise substantially perpendicular to the displacement direction (f') of said arms, said slot (16) passing through the entire thickness (t) of the arms.

2. Sensing element according to claim 1 characterized in that said tuning fork is of quartz and has its sides substantially parallel to the direction of the optical axis Z of the quartz.

3. Transducer for measuring the pressure of a gas characterized in that it comprises:

- a sensing element according to either of claims 1 and 2;

- a container (30, 32) provided with an opening (33) for allowing entry therein of the gas the pressure of which is to be measured, said tuning fork (10, 12, 14) being fastened within said container;

- means (34, 34', 36, 38, 46) for applying voltages to said electrodes (18, 18', 20, 20' or 22, 22') and for picking up (48 - 54 and 60 - 64') the oscillation frequency exhibited by said tuning fork under the effect of said pressure and

- means (56, 66) for converting the variations of said frequency into a pressure indication.

Fig.1

Fig.2a

Fig.2b

Fig. 3

Fig. 4

Fig.5